(19) Europäisches Patentamt
European Patent Office
Office européen des brevets

(11) **EP 3 860 797 B1**

(12) **EUROPÄISCHE PATENTSCHRIFT**

(45) Veröffentlichungstag und Bekanntmachung des Hinweises auf die Patenterteilung:
**09.08.2023 Patentblatt 2023/32**

(21) Anmeldenummer: **19773384.3**

(22) Anmeldetag: **18.09.2019**

(51) Internationale Patentklassifikation (IPC):
**B23K 26/046** (2014.01)   **B23K 26/38** (2014.01)
**B23K 26/382** (2014.01)   **B23K 26/70** (2014.01)

(52) Gemeinsame Patentklassifikation (CPC):
**B23K 26/046; B23K 26/38; B23K 26/382; B23K 26/707; G02B 7/36**

(86) Internationale Anmeldenummer:
**PCT/EP2019/074965**

(87) Internationale Veröffentlichungsnummer:
**WO 2020/069866 (09.04.2020 Gazette 2020/15)**

(54) **VORRICHTUNG ZUM EINSTELLEN EINER FOKUSLAGE EINES LASERSTRAHLS IN EINEM LASERBEARBEITUNGSSYSTEM, LASERBEARBEITUNGSSYSTEM MIT DERSELBEN UND VERFAHREN ZUM EINSTELLEN EINER FOKUSLAGE EINES LASERSTRAHLS IN EINEM LASERBEARBEITUNGSSYSTEM**

DEVICE FOR ADJUSTING A FOCUS POSITION OF A LASER BEAM IN A LASER PROCESSING SYSTEM, LASER PROCESSING SYSTEM COMPRISING THE SAME, AND METHOD FOR ADJUSTING A FOCUS POSITION OF A LASER BEAM IN A LASER PROCESSING SYSTEM

DISPOSITIF POUR RÉGLER L'EMPLACEMENT D'UN POINT DE FOCALISATION D'UN FAISCEAU LASER DANS UN SYSTÈME DE TRAITEMENT AU LASER, SYSTÈME DE TRAITEMENT AU LASER COMPRENANT UN TEL DISPOSITIF, ET PROCÉDÉ DE RÈGLAGE DE L'EMPLACEMENT D'UN POINT DE FOCALISATION D'UN FAISCEAU LASER DANS UN SYSTÈME DE TRAITEMENT AU LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.10.2018 DE 102018124627**

(43) Veröffentlichungstag der Anmeldung:
**11.08.2021 Patentblatt 2021/32**

(73) Patentinhaber: **Precitec GmbH & Co. KG**
**76571 Gaggenau-Bad Rotenfels (DE)**

(72) Erfinder: **BLÁZQUEZ SÁNCHEZ, David**
**76571 Gaggenau (DE)**

(74) Vertreter: **Ter Meer Steinmeister & Partner Patentanwälte mbB**
**Nymphenburger Straße 4**
**80335 München (DE)**

(56) Entgegenhaltungen:
**JP-A- H0 275 489       US-A1- 2014 347 655**
**US-A1- 2016 263 704    US-B1- 6 462 301**

EP 3 860 797 B1

## Beschreibung

Die vorliegende Offenbarung betrifft eine Vorrichtung zum Einstellen einer Fokuslage eines Laserstrahls in einem Laserbearbeitungssystem oder einem Laserbearbeitungskopf, wie beispielsweise einem Schneid- oder Schweißkopf, ein Laserbearbeitungssystem mit einer solchen Vorrichtung und ein Verfahren zum Einstellen einer Fokuslage eines Laserstrahls in einem Laserbearbeitungssystem entsprechend dem Oberbegriff der Ansprüche 1, 12 und 13 (siehe z.B US6 462 301 B). Die vorliegende Offenbarung betrifft die Bestimmung und Korrektur einer Fokuslage eines Bearbeitungslaserstrahls in Echtzeit.

## Stand der Technik

In einer Vorrichtung zur Materialbearbeitung mittels Laser, z.B. in einem Laserbearbeitungskopf etwa zum Laserschweißen oder Laserschneiden, wird der von einer Laserlichtquelle oder einem Ende einer Laserleitfaser austretende Laserstrahl mit Hilfe einer Strahlführungs- und Fokussierungsoptik auf das zu bearbeitende Werkstück fokussiert oder gebündelt. Standardmäßig wird ein Laserbearbeitungskopf mit einer Kollimator-Optik und einer Fokussier-Optik verwendet, wobei das Laserlicht über eine Lichtleitfaser zugeführt wird.

Ein Problem bei der Lasermaterialbearbeitung ist die sogenannte "thermische Linse", die auf die Erwärmung von optischen Elementen zur Laserstrahlführung- und -fokussierung durch die Laserleistung, insbesondere im Multi-Kilowatt-Bereich, und auf die Temperaturabhängigkeit der Brechzahl optischer Gläser zurückzuführen ist. Insbesondere führt eine inhomogene Erwärmung zu einem thermischen Gradienten in den Optiken, wodurch der Effekt der sogenannten "thermischen Linse" auftritt. Beispielsweise wird ein Schutzglas bei Durchtritt einer Laserstrahlung mit multi-kW Laserleistung durch den erzeugten thermischen Gradienten brechend, d.h. zu einer thermischen Linse. Im Vergleich wird ein homogen erhitztes Schutzglas hingegen nicht brechend.

Die thermische Linse führt bei der Lasermaterialbearbeitung zu einem Fokusshift entlang der Strahlausbreitungsrichtung, die sich negativ auf die Bearbeitungsqualität auswirken kann.

Während des Lasermaterialbearbeitungsprozesses treten in erster Linie zwei Mechanismen auf, die zu einer Erwärmung der optischen Elemente führen. Ursächlich hierfür sind zum einen eine Änderung der Laserleistung und zum anderen eine Verschmutzung der optischen Elemente. Weiterhin ist es möglich, dass die optischen Elemente eine mechanische Deformation erfahren, die zu einer Änderung der Brechkraft führt. Die mechanische Deformation kann beispielsweise durch eine thermische Ausdehnung der Fassung der optischen Elemente hervorgerufen werden.

Um eine qualitativ hochwertige Laserbearbeitung sicher zu stellen, ist es erforderlich die jeweilige Fokuslage zu erfassen und den Fokusshift auszugleichen, also eine schnelle und genaue Fokuslagensteuerung bereitzustellen.

Eine thermische Linse führt jedoch nicht nur zu einer Fokusverschiebung, sondern auch zu einer Verschlechterung der Strahlqualität, und kann beispielsweise Abbildungsfehler verursachen. Dies hat eine Änderung der gesamten Strahlkaustik, wie z.B. eines Fokusdurchmessers, zur Folge. Die Ermittlung der Fokuslage durch einen einfachen Vergleich mit Referenzwerten ist deswegen unpräzise und stellt keine Steuerung der Fokuslage in Echtzeit dar.

US 2016/263704 A1 offenbart ein Verfahren und eine Vorrichtung zur Herstellung eines dreidimensionalen Werkstücks mit Kompensation einer thermischen Fokuslagenverschiebung.

US 2014/347655 A1 offenbart einen Bearbeitungskopf für eine Laserbearbeitungsvorrichtung.

## Offenbarung der Erfindung

Es ist eine Aufgabe der vorliegenden Offenbarung, eine Vorrichtung zum Einstellen einer Fokuslage eines Laserstrahls in einem Laserbearbeitungssystem, ein Laserbearbeitungssystem mit einer solchen Vorrichtung und ein Verfahren zum Einstellen einer Fokuslage eines Laserstrahls in einem Laserbearbeitungssystem anzugeben, die zuverlässig und ohne komplexe mechanische Mittel eine oder mehrere Einstellungen für eine gewünschte bzw. vorgegebene Fokuslage bestimmen können. Insbesondere ist es eine Aufgabe der vorliegenden Offenbarung, eine oder mehrere Einstellungen für eine gewünschte bzw. vorgegebene Fokuslage eines Laserstrahls während eines Laserbearbeitungsprozesses in Echtzeit zu bestimmen und einzustellen.

Diese Aufgabe wird durch den Gegenstand der Ansprüche 1, 12 und 13 gelöst. Vorteilhafte Ausgestaltungen der Erfindung sind in den abhängigen Ansprüchen angegeben.

Gemäß einem ersten Aspekt der Erfindung ist eine Vorrichtung zum Einstellen einer vorgegebenen Fokuslage $Z$ eines Laserstrahls in einem Laserbearbeitungssystem angegeben. Die Vorrichtung umfasst eine Recheneinheit, die eingerichtet ist, um einen zeitabhängigen Wert $z_t$ der Fokuslage zu berechnen, wobei die Recheneinheit den zeitabhängigen Wert $z_t$ der Fokuslage basierend auf einem ersten Parameter, einem zweiten Parameter und einem dritten Parameter berechnet. Der erste Parameter umfasst einen laserleistungsabhängigen Fokusshift $A$, z.B. eine Größe eines laserleistungsabhängigen Fokusshifts pro Leistungseinheit bzw. Leistungsstufe, z.B. in Millimeter pro Kilowatt. Beispielsweise ist bei einem Abbildungsmaßstab von 1 und einer Änderung der Laserleistung $\Delta P$ von 1 kW der laserleistungsabhängige Fokusshift $A$ der Fokusshift im stationären Zustand, also $t\to\infty$. Der zweite Parameter umfasst eine Zeitkonstante $\tau$ einer Änderung der Fokuslage aufgrund einer thermischen Linse, d.h. aufgrund einer temperaturinduzierten Brechkraftänderung, von zumindest einem optischen Element einer Laserstrahloptik. Beispielsweise beschreibt die Zeitkonstante $\tau$ die Zeitspanne, bis sich die Fokuslage um den Faktor $1/e$ ändert bzw. um den Faktor $1/e$ abfällt. Die Zeitkonstante $\tau$ kann daher auch als Zeitkonstante eines temperaturinduzierten Fokusshifts betrachtet werden. Der dritte Parameter umfasst eine aktuelle Laserleistung $P$. Die Recheneinheit kann ferner eingerichtet sein, um zum Einstellen der vorgegebenen Fokuslage $Z$ eine Einstellung für eine Einstelleinheit zum Einstellen der Fokuslage zu berechnen. Die Einstellung kann eine Position von wenigstens einem beweglichen optischen Element der Laserstrahloptik, das zum Einstellen der Fokuslage eingerichtet ist, beispielsweise etwa eine Linsenposition, umfassen. Die Vorrichtung umfasst zudem eine Steuereinheit, die eingerichtet ist, um mittels der Einstelleinheit zum Einstellen der Fokuslage die vorgegebene Fokuslage des Laserstrahls basierend auf der berechneten Einstellung bzw. auf dem zeitabhängigen Wert $zt$ der Fokuslage einzustellen. Hierbei kann die Laserstrahloptik die Gesamtheit der optischen Elemente im Strahlengang des Laserstrahls im Laserbearbeitungssystems bezeichnet werden. Bevorzugte, optionale Ausführungsformen und besondere Aspekte der Offenbarung ergeben sich aus den abhängigen Ansprüchen, den Zeichnungen und der vorliegenden Beschreibung.

Erfindungsgemäß wird unter Verwendung dreier Parameter, nämlich des laserleistungsabhängigen Fokusshifts $A$, der Zeitkonstante $\tau$ und einer aktuellen Laserleistung $P$, die Position des Fokus z.B. in Bezug auf das Werkstück berechnet. Basierend darauf kann die Fokuslage eingestellt werden, damit die tatsächliche Fokuslage beispielsweise einer Soll-Fokuslage entspricht.

Damit kann eine Fokuseinstellung in Echtzeit auf eine bautechnisch kompakte und modulare Weise ermöglicht werden. Insbesondere wird für die Einstellung der Fokuslage ein zeitabhängiger Korrekturterm, der den dynamischen Verlauf des temperaturinduzierten Fokusshifts berücksichtigt, verwendet. Beispielsweise kann die Fokuseinstellung in Echtzeit basierend auf einer voreingestellten Steuerkurve, die mit dem zeitabhängigen Korrekturterm ergänzt wird, erfolgen. Der zeitabhängige Korrekturterm erfordert keinen komplexen mechanischen Aufbau, wodurch eine Komplexität der Vorrichtung sowohl bei der Herstellung als auch bei der Bedienung verringert werden kann. Zudem ermöglicht die erfindungsgemäße Lösung, auf den Fokusshift bzw. Schwankungen des Fokus flexibel zu reagieren. Beispielsweise können ein oder mehrere Faktoren berücksichtigen werden, wie eine Streuung aufgrund der Absorption von optischen Materialen, unterschiedliche thermische Rahmenbedingungen (z.B. Wasserkühlung, Durchfluss und Temperatur) oder eine Verschmutzung der Laserstrahloptik. Alle diese Einflüsse können mit Hilfe der richtigen Wahl der Parameter des laserleistungsabhängigen Fokusshifts $A$ und der Zeitkonstante $\tau$ so weit korrigiert werden, dass die Prozessqualität gesichert ist. Die Parameter können durch einen Benutzer des Laserbearbeitungssystems eingestellt werden.

Vorzugsweise sind die Recheneinheit und die Steuereinheit in einem gemeinsamen Software- und/oder Hardware-Modul, wie beispielsweise einer Rechen- und Steuereinheit, realisiert. Die Rechen- und Steuereinheit kann auch als "Auswerteeinheit" bezeichnet werden. Die Rechen- und Steuereinheit kann gemäß einigen Ausführungsformen ein Speichermedium umfassen, in dem Daten gespeichert sind, die zum Berechnen der Fokuslage verwendet werden.

Vorzugsweise umfasst das Laserbearbeitungssystem eine Laserstrahloptik, die ein oder mehrere optische Elemente umfassen kann, wie beispielsweise eine Linse oder ein Linsensystem. Insbesondere kann die Laserstrahloptik mindestens ein optisches Element mit temperaturabhängiger Brechkraft und/oder ein bewegliches optisches Element eingerichtet zum Einstellen der Fokuslage umfassen. Die thermische Linse bzw. die temperaturinduzierte Brechkraftänderung kann in wenigstens einem optischen Element der Laserstrahloptik auftreten. Hierbei kann das optische Element der Laseroptik, das eine temperaturabhängige Brechkraft aufweist, d.h. dem Effekt der thermischen Linse unterliegt, ein bewegliches optisches Element sein oder umfassen, das zum Einstellen der Fokuslage eingerichtet ist. Das mindestens eine optische Element mit der temperaturabhängigen Brechkraft und das mindestens eine bewegliche optische Element zum Einstellen der Fokuslage können dieselben oder unterschiedliche Elemente sein oder umfassen. Die Laseroptik kann beispielsweise eine Kollimator-Optik, eine Fokussier-Optik, eine Zoom-Optik, eine Strahlformungsoptik und/oder ein Schutzglas umfassen. Eine Optik kann hier eine Linse oder eine Linsengruppe mit definierter Brennweite oder eine Linsengruppe mit variabler Brennweite (z.B. bei einer Linsengruppe mit mehreren beweglichen Linsen in einer Zoom-Optik) bezeichnen. Das eine oder die mehreren optischen Elemente können aus Quarzglas bestehen. Die vorliegende Offenbarung ist jedoch nicht hierauf beschränkt, und das eine oder die mehreren optischen Elemente können aus anderen Materialen bestehen, wie beispielsweise $CaF_2$ oder Saphir.

Vorzugsweise ist die Recheneinheit weiter eingerichtet, um den zeitabhängigen Wert der Fokuslage basierend auf einem weiteren Parameter, der eine Vergrößerung $m$ der Laserstrahloptik angibt, zu berechnen. Hierbei kann die Vergrößerung $m$ auch als Vergrößerung des Laserbearbeitungssystems bezeichnet werden. In einigen Ausführungsformen können der laserleistungsabhängige Fokusshift A und die Zeitkonstante $\tau$ voreingestellt sein, aber für einen Benutzer des Laserbearbeitungssystems einstellbar bzw. veränderbar sein. Der Parameter Vergrößerung $m$ hingegen, der für die Fokuslageeinstellung verwendet wird, ist vorzugsweise bekannt und kann durch den Benutzer nicht verändert oder eingestellt werden.

Entsprechend einem ersten Fall der Erfindung ist die Recheneinheit eingerichtet, um den zeitabhängigen Wert *zt* der Fokuslage unter Verwendung der folgenden Gleichung zu berechnen:

$$z_t(\Delta P, t) = A \cdot m^2 \cdot \Delta P \cdot (1 - e^{-t/\tau})$$

wobei $\Delta P = P - P_0$ ist, und wobei P die aktuelle Laserleistung zum Zeitpunkt $t$ und $P_0$ eine Referenzlaserleistung angibt. Der Zeitpunkt $t=0$ ist als der Zeitpunkt definiert, zu dem eine Änderung der Referenzleistung stattfindet, d.h. wenn $\Delta P \neq 0$. Bei einer Änderung der Laserleistung um $\Delta P$ kann sich die thermische Linse bzw. die temperaturinduzierte Brechkraftänderung gemäß der Zeitkonstante $\tau$ ändern. Diese Änderung führt zu einer Änderung der Fokuslage, die mit Hilfe des Korrekturterms $z_t(\Delta P, t)$ beschrieben werden kann. Der Korrekturterm $z_t(\Delta P, t)$ berücksichtigt diese Dynamik der thermischen Linse, wodurch die tatsächliche Fokuslage genauer bestimmt und eingestellt werden kann. Insbesondere kann das Einstellen der vorgegebenen Fokuslage $Z$ durch die Steuereinheit derart erfolgen, dass die dynamischen Effekte der thermischen Linse, die durch den Korrekturterm $z_t(\Delta P, t)$ beschrieben sind, kompensiert werden. Hierdurch kann eine Bearbeitungsqualität verbessert werden.

In einem Ausführungsbeispiel kann der laserleistungsabhängige Fokusshift A in einem Bereich von 0,002 - 0,2 mm/kW liegen, oder insbesondere 0,04 mm/kW betragen. In einem Ausführungsbeispiel kann die Zeitkonstante $\tau$ in einem Bereich von 0,1 - 1000 s liegen, oder insbesondere 30 s betragen.

Vorzugsweise ist die Recheneinheit weiter eingerichtet, um einen stationären Wert $z_0$ der Fokuslage zu verwenden, wobei die Steuereinheit eingerichtet ist, um die Fokuslage des Laserstrahls basierend auf dem zeitabhängigen Wert $z_t$ und dem stationären Wert $z_0$ einzustellen. Der stationäre Wert $z_0$ der Fokuslage für eine Referenzleistung $P_0$ bei einer bestimmten Linsenposition $L_1$ kann z.B. mit Hilfe einer Raytracing Software berechnet werden. Vorzugsweise ist ein oder mehrere stationäre Werte jeweils für eine vorgegebene Referenzleistung $P_0$ als Steuerkurve gespeichert. Mit anderen Worten kann eine Einstellung für die Einstelleinheit entsprechend stationären Wert $z_0$ der Fokuslage, d.h. beispielsweise eine Linsenposition $L_1(z_0(P_0))$ für die stationäre Fokuslage $z_0$, in der Recheneinheit oder Steuereinheit gespeichert sein.

Der stationäre Wert $z_0$ kann zeitunabhängig sein und kann insbesondere die Fokuslage ohne die thermische Linse für die Referenzlaserleistung $P_0$ abgeben. Der stationäre Wert $z_0$ kann die Fokuslage ($z$) ohne Berücksichtigung eines dynamischen Verhaltens der thermischen Linse für die Referenzlaserleistung $P_0$ angeben. Mit anderen Worten kann der stationäre Wert $z_0$ die Fokuslage ($z$) ohne die thermische Linse für die Referenzlaserleistung $P_0$ = 0 kW angeben. Die Fokuslage kann eine Summe aus dem stationären Wert $z_0$ und dem zeitabhängigen Wert $z_t$ umfassen oder sein.

Der stationäre Wert $z_0$ kann weiter die Fokuslage mit einer thermischen Linse ohne Berücksichtigung eines dynamischen Verhaltens für die Referenzlaserleistung $P_0$ angeben. Der stationäre Wert $z_0$ basiert in diesem Fall auf einer Änderung eines Brechungsindex $n$, z.B. des optischen Elements, das die thermische Linse verursacht, als Funktion einer auf das optische Element treffenden Referenzlaserleistung $P_0$.

Vorzugsweise ist die Steuereinheit eingerichtet, um die Fokuslage des Laserstrahls weiter basierend auf einem Offset $z_{Off}$ der Fokuslage einzustellen. Der Offset $z_{Off}$ *kann* unabhängig von der Zeit und der Laserleistung sein. Der Offset $z_{Off}$ kann jeweils für eine Vergrößerung $m$ definiert sein, wobei, z.B. in einem Zoomsystem, mehrere Vergrößerungen $m$ möglich sind. Insbesondere kann der Offset $z_{Off}$ Toleranzen ausgleichen, wie beispielsweise mechanische Toleranzen. Der Offset $z_{Off}$ kann zur Feineinstellung für eine präzisere Bestimmung der Fokuslage dienen. Die Fokuslage kann eine Summe aus dem stationären Wert $z_0$, dem zeitabhängigen Wert $z_t$ und dem Offset $z_{Off}$ umfassen oder sein.

Vorzugsweise umfasst die Vorrichtung eine Benutzerschnittstelle, die eingerichtet ist, um Benutzereingaben wenigstens für den laserleistungsabhängigen Fokusshift A und die Zeitkonstante $\tau$ der thermischen Linse zu empfangen. Optional kann die Benutzerschnittstelle eingerichtet sein, um eine Benutzereingabe für den mindestens einen Offset $z_{Off}$ zu empfangen. Die Benutzerschnittstelle kann dem Benutzer eine Variation dieser Parameter ermöglichen. Damit können Effekte durch Komponententausch, Alterung oder Verschmutzung von Optiken kompensiert werden.

Gemäß einem weiteren Aspekt der Erfindung ist ein Laserbearbeitungssystem definiert, siehe Anspruch 12. Das Laserbearbeitungssystem umfasst eine Laservorrichtung zum Bereitstellen eines Laserstrahls, eine Laserstrahloptik im Strahlengang des Laserstrahls, wobei die Laserstrahloptik mindestens ein optisches Element mit temperaturabhängiger Brechkraft umfasst, und die Vorrichtung zum Einstellen einer Fokuslage eines Laserstrahls gemäß den Ausführungsformen der vorliegenden Offenbarung. Das Laserbearbeitungssystem kann ein Laserschneidkopf oder ein Laserschweißkopf sein.

Gemäß einem noch weiteren Aspekt der Erfindung ist ein Verfahren zum Einstellen einer vorgegebenen Fokuslage eines Laserstrahls in einem Laserbearbeitungssystem definiert. Das Verfahren umfasst ein Bereitstellen eines ersten Parameters, eines zweiten Parameters und eines dritten Parameters, wobei der erste Parameter einen laserleistungsabhängigen Fokusshift A, der zweite Parameter eine Zeitkonstante $\tau$ einer Änderung der Fokuslage aufgrund einer thermischen Linse, d.h. einer temperaturinduzierten Brechkraftänderung, von zumindest einem optischen Element einer Laserstrahloptik um den Faktor $1/e$ und der dritte Parameter eine aktuelle Laserleistung $P$ zum Zeitpunkt $t$ angibt, ein Berechnen eines zeitabhängigen Werts $z_t$ der Fokuslage basierend auf dem ersten Parameter, dem zweiten Parameter und dem dritten Parameter, und ein Einstellen der vorgegebenen Fokuslage $Z$ des Laserstrahls basierend auf dem zeitabhängigen Wert $z_t$ der Fokuslage.

Das Verfahren kann die Merkmale und Eigenschaften der Vorrichtung zur Bestimmung einer Fokuslage eines Laserstrahls in einem Laserbearbeitungssystem und des Laserbearbeitungssystems gemäß den hier beschriebenen Ausführungsformen umfassen und implementieren.

## Kurze Beschreibung der Zeichnungen

Ausführungsbeispiele der Offenbarung sind in den Figuren dargestellt und werden im Folgenden näher beschrieben. Es zeigen:

Figur 1 ein Laserbearbeitungssystem gemäß Ausführungsformen der vorliegenden Offenbarung,
Figur 2 einen Laserstrahl und eine Kollimator-Optik des Laserbearbeitungssystems gemäß Ausführungsformen der vorliegenden Offenbarung,
Figur 3 eine Kollimator-Linse und ihren Brechungsindex-Gradienten;
Figur 4 ein Laserbearbeitungssystem mit einem Koordinatensystem;
Figur 5 ein Diagramm der Linsenposition in Abhängigkeit der stationären Komponente der Fokuslage und der Laserstrahlleistung; und
Figur 6 ein dynamisches Verhalten der Fokuslage bei unterschiedlichen Leistungsänderungen der Laserstrahlleistung.

## Ausführungsformen der Offenbarung

Im Folgenden werden, sofern nicht anders vermerkt, für gleiche und gleichwirkende Elemente gleiche Bezugszeichen verwendet.

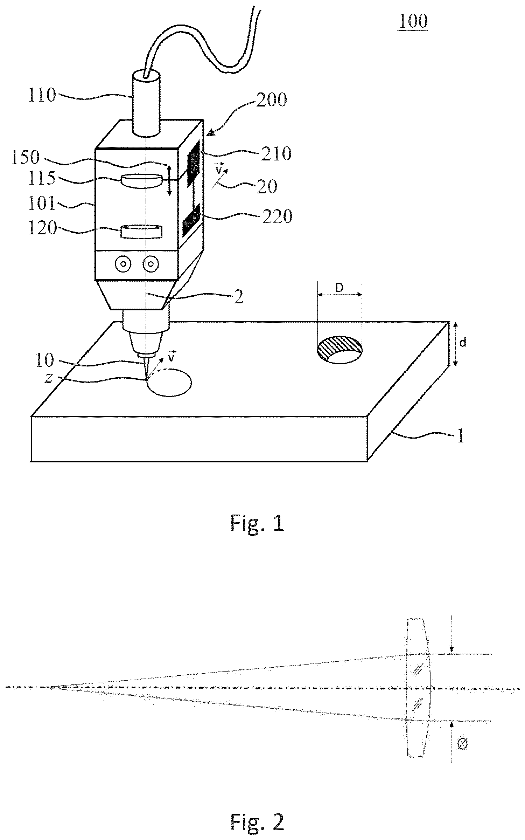

Figur 1 zeigt ein Laserbearbeitungssystem 100 gemäß Ausführungsformen der vorliegenden Offenbarung.

Das Laserbearbeitungssystem 100 kann einen Bearbeitungskopf 101, wie beispielsweise einen Schneidkopf oder Schweißkopf, umfassen oder ein solcher Bearbeitungskopf 101 sein. Das Laserbearbeitungssystem 100 umfasst eine Laservorrichtung 110 zum Bereitstellen eines Laserstahls 10 (auch als "Bearbeitungsstrahl" oder "Bearbeitungslaserstrahl" bezeichnet). Die Laservorrichtung 110 kann eine Lichtleitfaser umfassen oder eine Lichtleitfaser sein, über die der Laserstrahl 10 in den Bearbeitungskopf 101 geliefert wird.

Das Laserbearbeitungssystem 100 umfasst eine Laserstrahloptik. Die Laserstrahloptik kann insbesondere eine Kollimator-Optik 115, wie beispielsweise eine Kollimator-linse, zur Kollimation des Laserstrahls 10 oder ein Zoomsystem mit mehreren Linsen aufweisen. Der Laserstrahl 10 kann von der Laservorrichtung 110 über ein optionales optisches Element der Laserstrahloptik (nicht gezeigt), das ein Schutzglas vor der Kollimator-Optik, eine Strahlformung-Optik, eine Linse oder eine Blende oder eine Kombination davon sein kann, zur Kollimator-Optik 115 laufen.

Alternativ oder ergänzend umfasst die Laserstrahloptik eine Fokussier-Optik 120, wie beispielsweise eine Fokuslinse oder ein Linsensystem zur Fokussierung des Laserstrahls 10 auf ein Werkstück 1. Die Kollimator-Optik 115 und die Fokussier-Optik 120 können in den Bearbeitungskopf 101 integriert sein. Beispielsweise kann der Bearbeitungskopf 101 ein Kollimator-Modul umfassen, das in den Bearbeitungskopf 101 integriert oder am Bearbeitungskopf 101 montiert ist.

Das Laserbearbeitungssystem 100 oder Teile davon, wie beispielsweise der Bearbeitungskopf 101, kann gemäß Ausführungsformen entlang einer Bearbeitungsrichtung 20 bewegbar sein. Die Bearbeitungsrichtung 20 kann eine Schweißrichtung und/oder eine Bewegungsrichtung des Laserbearbeitungssystems 100, wie beispielsweise des Bearbeitungskopf 101, bezüglich des Werkstücks 1 sein. Insbesondere kann die Bearbeitungsrichtung 20 eine horizontale Richtung sein. Die Bearbeitungsrichtung 20 kann auch als "Vorschubrichtung" bezeichnet werden.

Das Laserbearbeitungssystem 100 bzw. der Laserbearbeitungskopf 101 umfasst die Vorrichtung 200 zum Einstellen einer vorgegebenen oder gewünschten Fokuslage $Z$ des Laserstrahls 10 gemäß den Ausführungsformen der vorliegenden Offenbarung. Die Fokuslage $z$ kann bezüglich des Werkstücks 1 in Echtzeit eingestellt werden. Die Fokuslage $z$ kann die Position des Fokus des durch die Fokussier-Optik 120 fokussierten Laserstrahls 10 z.B. bezüglich des Werkstücks 1 angeben.

Die Vorrichtung 200 umfasst die Recheneinheit, die eingerichtet ist, um einen zeitabhängigen Wert $zt$ der Fokuslage $z$ zu berechnen, und eine Steuereinheit, die eingerichtet ist, um mittels eines beweglichen optischen Elements der Laserstrahloptik die vorgegebene Fokuslage $Z$ des Laserstrahls 10 basierend auf dem zeitabhängigen Wert $z_t$ einzustellen. Die Recheneinheit und die Steuereinheit können in einem gemeinsamen Software- und/oder Hardware-Modul realisiert sein. Im Beispiel der Figur 1 ist eine integrierte Rechen- und Steuereinheit 210 dargestellt. Alternativ dazu können die Recheneinheit und die Steuereinheit jeweils in getrennten Software- und/oder Hardware-Modulen realisiert sein.

Die Fokuslage $z$ des Laserstrahls 10 kann im Wesentlichen parallel zu einer optischen Achse 2 des Laserbearbeitungssystems 100 definiert sein bzw. bestimmt werden. In der Figur 1 ist die Fokuslage $z$ beispielhaft an einer Oberfläche des Werkstücks 1 dargestellt.

Das Laserbearbeitungssystem 100 umfasst eine Einstelleinheit 150 zum Einstellen der Fokuslage $z$. Die Einstelleinheit 150 kann in der Steuereinheit umfasst sein oder mit der Steuereinheit verbunden sein. Basierend auf der durch die Vorrichtung 200 ermittelten Fokuslage $z$ stellt die Einstelleinheit 150 die Fokuslage $z$ ein. Zum Beispiel kann die Fokuslage z so eingestellt werden, dass sie der vorgegebenen Fokuslage Z, d.h. einer Soll-Fokuslage, beispielsweise in einem Bereich des Werkstücks 1, wie an einer Oberfläche oder innerhalb des Werkstücks 1, entspricht. Die Einstelleinheit 150 zum Einstellen der Fokuslage z kann beispielsweise einen Stellantrieb umfassen, der zur Fokuslagesteuerung zumindest ein bewegliches optisches Element der Laserstrahloptik verschiebt, wie beispielsweise die Kollimator-Optik 115 und/oder die Fokussier-Optik 120.

In einigen Ausführungsformen umfasst die Vorrichtung 200 ein Mittel 220 zum Erfassen der aktuellen Laserstrahlleistung (z.B. eine momentane Leistung bei CW-Betrieb oder eine mittlere Leistung bei Kurzpuls-Betrieb). Die Vorrichtung 200 oder das Laserbearbeitungssystem 100 bzw. der Laserbearbeitungskopf kann beispielsweise einen Leistungssensor aufweisen, der eingerichtet ist, um die Laserstrahlleistung des Laserstrahls 10 zu messen oder bestimmen. Der Leistungssensor kann die momentane bzw. aktuelle Laserstrahlleistung messen oder bestimmen. Alternativ kann die Vorrichtung 200 eine Datenschnittstelle umfassen, über die Daten bezüglich der aktuellen Laserstrahlleistung beispielsweise von der Laservorrichtung 110 oder einer Steuerung des Laserbearbeitungssystems 100 bzw. des Laserbearbeitungskopfs empfangen werden können. Die Vorrichtung 200 kann die Laserleitung beim Bestimmen und/oder Einstellen der Fokuslage $z$ verwenden, wie es später beschrieben ist.

Bei optischen Elementen der Laserstrahloptik, wie beispielsweise Schutzgläsern und/oder der Kollimator-Optik 115 und/oder der Fokussier-Optik 120, kann das Phänomen der thermisch induzierten Brechkraft, also die thermische Linse, auftreten. Die thermische Linse kann dabei ein dynamischer Effekt sein. Diese Dynamik wird unter Bezugnahme auf die Figuren 1 und 2 näher erläutert.

Figur 1 zeigt einen Schneidkopf, der Kreise mit einem Durchmesser $D$ in einem metallischen Blech (z.B. Edelstahl) mit der Dicke $d$ bei einer Vorschubgeschwindigkeit v schneidet. Für eine Blechdicke von $d$ = 20 mm kann beispielsweise eine Vorschubgeschwindigkeit $v$ = 2 m/min bei einer Laserleistung von 15 kW verwendet werden. Wenn der Kreisdurchmesser $D$ = 50 mm ist, braucht der Schneidkopf etwa 10 s für jeden Kreis. Wenn nur ein Kreis in das Blech geschnitten wird, kann die Leistung kurz vor dem Schnitt 0 kW, während dem Schnitt 15 kW und nach dem Schnitt 0 kW sein. Die Fokuslage kann hier auch innerhalb des Blechs angeordnet sein, d.h. unterhalb der Blechoberfläche.

Die Temperaturleitfähigkeit $\kappa$ oder Temperaturleitzahl (gelegentlich auch "Wärmediffusivität" vom englischen "thermal diffusivity" genannt), ist eine Materialeigenschaft, die zur Beschreibung der zeitlichen Veränderung der räumlichen Verteilung der Temperatur durch Wärmeleitung als Folge eines Temperaturgefälles dient. Sie misst die Wärmeübertragungsrate eines Materials von der heißen Seite zur kalten Seite. Sie ist verwandt mit der Wärmeleitfähigkeit, die zur Beschreibung des Energietransportes dient. Für Quarzglas ist die Wärmediffusivität $\kappa$ = 0,007 cm$^2$/s. Figur 2 zeigt eine Linse (z.B. die Kollimator-Linse) der Laserstrahloptik sowie den Laserstrahl, der auf die Linse mit einem Strahldurchmesser von etwa Ø = 10 mm trifft. In diesem Beispiel ist die Wärmediffusionszeit etwa $r = (Ø/2)^2/\kappa \approx 36$ s.

Bei einem Vergleich der bezüglich der Figuren 1 und 2 genannten Zeitskalen von etwa 10 s und 36 s wird klar, dass der Kreis in einer Zeit geschnitten wird, in der die Temperaturverteilung auf der Laserstrahloptik nicht stationär ist. Damit kann das transiente Verhalten bei der Schneidqualität entscheidend sein. Für dünnere Bleche, kleinere Geometrien und höhere Laserleistung ist dies noch ausgeprägter.

Damit ist es vorteilhaft, den Fokusshift in Echtzeit und dynamisch zu kompensieren. Hierzu gibt es verschiedene Möglichkeiten, von denen einige nachfolgendend erläutert werden, um die Vorteile der erfindungsgemäßen Kompensation, die den zeitabhängigen Korrekturterm verwendet, herauszustellen.

Beispielsweise kann eine Fokuslageregelung basierend auf einer Vermessung einer physikalischen Eigenschaft, die mit der thermischen Linse korrelieren kann, verwendet werden (ohne eine Vermessung der Fokuslage). Dies führt zwar zu einer Verbesserung in der Bearbeitungsqualität mit minimalem bautechnischem Aufwand, erlaubt aber keine hohe Präzision bei der Fokuslagesteuerung und somit keine hohe Bearbeitungsqualität.

Es kann auch eine Fokuslageregelung mit einer Bestimmung der Fokuslage verwendet werden. Hierfür kann ein Bruchteil des Laserstrahls ausgekoppelt und von einem Sensor ausgewertet werden. Beim Auftreten einer thermischen Linse ändert sich die Fokuslage, und der Sensor kann eine Änderung des Strahldurchmessers detektieren. Der Fokuslagesensor ermittelt eine Ist-Fokuslage durch einen Vergleich des Strahldurchmessers und der bekannten Strahlkaustik des Laserstrahls (Referenzmessung). Die thermische Linse führt jedoch nicht nur zu einer Fokusverschiebung, sondern auch zu einer Verschlechterung der Strahlqualität (Abbildungsfehler), die eine Änderung der gesamten Strahlkaustik, z.B. des Fokusdurchmessers, zur Folge hat. Die Ermittlung der Fokuslage durch einen Vergleich mit Referenzwerten ist deswegen unpräzise, oder mit anderen Worten keine Fokuslagenvermessung in Echtzeit.

Erfindungsgemäß wird nun in einer Fokuslagensteuerung berücksichtigt, dass die thermische Linse bzw. eine temperaturinduzierte Brechkraftänderung einer Dynamik unterworfen ist. Anders gesagt, geht in die Berechnung der aktuellen bzw. tatsächlichen Fokuslagen über einen Korrekturterm ein, dass die thermische Linse zeitabhängig ist. Hierzu wird unter Verwendung zweier Parameter, nämlich des laserleistungsabhängigen Fokusshifts A in der Laserstrahloptik und der Zeitkonstante $\tau$ einer Änderung der Fokuslage aufgrund der thermischen Linse in der Laserstrahloptik, die tatsächliche Position des Fokus z.B. in Bezug auf das Werkstück berechnet. Basierend darauf kann die Fokuslage eingestellt werden, damit die tatsächliche Fokuslage beispielsweise einer vorgegebenen bzw. gewünschten bzw. Soll-Fokuslage am Werkstück entspricht.

Im Folgenden wird eine bevorzugte Ausführungsforme der erfindungsgemäßen Berechnung der aktuellen bzw. tatsächlichen Fokuslagen im Detail beschreiben.

Bezugnehmend auf die Figur 1 wird die Fokuslage z des Bearbeitungskopfes 101 mit Hilfe einer motorischen Verstellung beispielsweise der Kollimator-Optik 115, die eine oder mehrere Linsen umfassen kann, eingestellt. Die Rechen- und Steuereinheit 210 (auch als "Auswerteeinheit" bezeichnet) verwendet Leistungsdaten (z.B. eine momentane Leistung bei CW-Betrieb oder eine mittlere Leistung bei Kurzpuls-Betrieb) sowie optional weitere Prozessparameter, wie zum Beispiel die Soll-Fokuslage, um die motorische Verstellung zu steuern. Die Leistungsdaten werden entweder durch eine Schnittstelle zum Laser bzw. zur Laseranlage, einen integrierten Sensor oder beides aufgenommen. Sowohl die Rechen- und Steuereinheit 210 als auch die Leistungsdatenerfassung können im Bearbeitungskopf 101 integriert sein. Alternativ können sie extern bereitgestellt und durch eine Schnittstelle mit dem Bearbeitungskopf 101 verbunden sein.

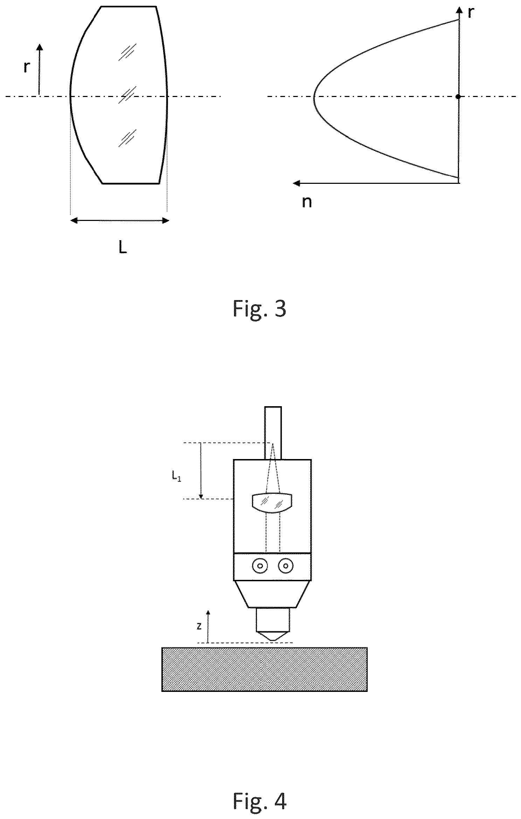

Die Rechen- und Steuereinheit 210 kann ein Speichermedium umfassen, in dem eine Beziehung zwischen einer Position $L_1$ der Laserstrahloptik (z.B. der in der Figur 1 oder 4 gezeigten Linse, die eine Kollimator-Optik oder eine Fokussier-Optik sein kann) und der Fokuslage z des Laserstrahls gespeichert ist:

$$L_1 = L_1(z) \qquad (1)$$

Weil die Fokuslage z von der Laserleistung P und der Zeit t abhängig ist kann man Gleichung (1) nicht ohne weiteres als Steuerkurven speichern. Um eine präzise Fokuseinstellung in Echtzeit zu ermöglichen, kann die Fokuslage z wie folgt beschrieben werden:

$$z = z(P,t) = z_0(P_0) + z_t(\Delta P, t) + z_{Offset} \qquad (2)$$

Die Fokuslage z ist abhängig von der Laserleistung P und der Zeit t. Die Fokuslage z kann in dieser Ausführungsform in drei Komponenten geteilt werden:

1. Die erste Komponente $z_0(P_0)$ ist stationär bzw. unabhängig von der Zeit, kann aber von der Referenzlaserleistung $P_0$ abhängen. Eine mögliche Implementierung ist in Figur 3 bis Figur 5 dargestellt und wird später beschrieben.
2. Die zweite Komponente $z_t(\Delta P, t)$ ist abhängig von der Laserleistung und der Zeit. $\Delta P$ ist definiert als $\Delta P = P - P_0$. Anders gesagt ist $\Delta P$ als die Differenz zwischen der aktuellen Leistung und der Referenzlaserleistung $P_0$ des stationären Terms definiert. Weitere Details sind später beschrieben.
3. Eine dritte Komponente $z_{Offset}$ ist ein Offsetwert. Dieser dient z.B. als Abgleich für optomechanische Toleranzen. Diese Komponente ist unabhängig von Zeit und Leistung.

Stationäre Komponente $z_0(P_0)$

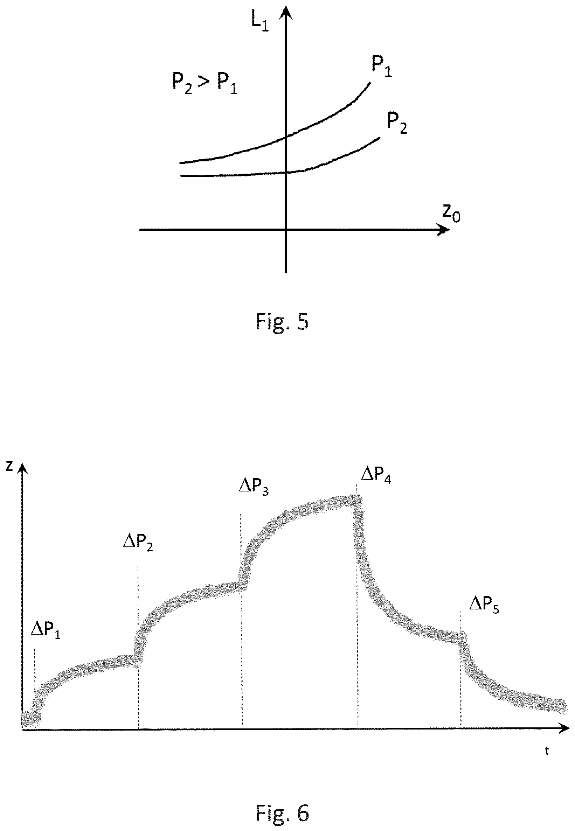

Die stationäre Komponente $z_0(P_0)$ beschreibt im einfachsten Fall die Position $L_1$ der Laserstrahloptik ohne die thermische Linse für P=0 kW, also $L_1(P_0=0\ kW)$. Eine beispielshafte Beschreibung von $L_1$ ist in den Figuren 4 und 5 dargestellt. Die Position $L_1$ der Laserstrahloptik ist für unterschiedliche Referenzlaserleistungen $P_{01}$ und $P_{02}$ unterschiedlich. Die Position $L_1$ kann zum Beispiel mittels einer Raytracing-Software berechnet werden. Hier wird die thermische Linse modelliert, d.h. der Brechungsindex n der Optik-Komponente ist als Folge des thermischen Gradienten ebenfalls ein Gradient. Es gibt verschiedene Ansätze, um diese Gradienten zur modellieren. In erster Näherung kann zum Beispiel ein parabolischer Gradient entlang eine Achse r senkrecht zur optischen Achse verwenden, wie es in der Figur 3 dargestellt ist:

$$n(r) = n_0 + c_2 \cdot r^2 \qquad (3)$$

mit:

$$c_2 = -\frac{a \cdot P}{4\pi \cdot K_T} \cdot \frac{dn}{dT} \cdot \frac{1}{L \cdot r_{Strahl}^2} \qquad (4)$$

$n_0$ ist der Brechungsindex des optischen Elements für $r = 0$, bzw. auf die optische Achse, $r_{Strahl}$ ist der Radius des Laserstrahls (also $\text{Ø}/2$), $L$ ist die Dicke der Optik-Komponente (also der Linse), $K_T$ ist der Wärmeleitungskoeffizient des Linsenmaterials, $P$ ist die Laserleistung, $a$ ist die Absorption in der Optik- Komponente, und $dn/dT$ ist die Änderung des Brechungsindex $n$ als Funktion der Temperatur $T$.

Die Gleichungen (3) und (4) dienen als Basis für die Berechnung von $z_0(P_0)$ in Gleichung (2) und beschreiben den Brechungsindexgradienten im stationären Zustand ($t\rightarrow\infty$). Der Term $z_0(P_0)$ ist insbesondere die Lösung auf folgende Frage: welcher Abstand zwischen Faserende und dem optischen Element zur Einstellung der Fokuslage, z.B. der Kollimationsoptik, ist notwendig, um die Fokuslage $z_0$ bzw. die Position $L_1(z_0)$ bei einer Referenzlaserleistung von $P_0$ zu erhalten? Die Lösung zur diese Frage wird als Steuerkurve gespeichert.

Die Beschreibung des Brechungsindex kann mit anderen Modellen für den Temperaturverlauf weiter präzisiert werden. Hier sind mehrere Optionen möglich, z.B. eine genaue analytische Beschreibung des Gradienten $n(r)$ oder numerische Methoden, wie Finite-Elemente-Methoden.

Bezugnehmend auf die Figur 5 erfolgt die Beschreibung der stationären Komponente $z_0(P_0)$ derart, dass die Position $L_1$ in Abhängigkeit der Referenzlaserleistung $P_{01}$, $P_{02}$ exakt berechnet wird. Dies ist insbesondere dann vorteilhaft, wenn die Laserstrahloptik keine einfache Linse ist, sondern ein Linsensystem (z.B. ein Zoomsystem), bei dem es zwei oder mehrere bewegliche Linsen gibt und damit mehrere Linsenpositionen notwendig sind, um eine bestimmte Fokuslage und einen bestimmten Fokusdurchmesser zu erreichen. Zudem ist in der Figur 5 die Anzahl der Kurven nicht begrenzt. Zum Beispiel können die Positionen für kleinere Abstufungen der Laserleistung berechnet werden. Alternativ oder ergänzend können die Positionen zwischen zwei Kurven interpoliert werden.

Die Linsenpositionen $L_1(z_0(P_0))$ können in der Rechen- und Steuereinheit gespeichert sein. In einigen Ausführungen können die Positionen nicht nur für eine Referenzlaserleistung, sondern für mehrere Referenzlaserleistungen gespeichert sein: z.B. $L_1(z_{01}(P_{01}))$, $L_1(z_{02}(P_{02}))$, $L_1(z_{03}(P_{03}))$, $L_1(z_{04}(P_{04}))$.

Dynamische Komponente $\underline{z_t(\varDelta P, t)}$

Die zweite Komponente $z_t(\varDelta P, t)$ beschreibt das dynamische Verhalten des Fokusshifts, und beschreibt insbesondere das in der Figur 6 gezeigte Verhalten. Figur 6 zeigt ein beispielhaftes dynamisches Verhalten der Fokuslage $z$ bei unterschiedlichen Leistungsänderungen $\varDelta P_1$ bis $\varDelta P_5$, wobei die vorgegebene Fokuslage $Z$ unverändert ist. Ziel dieser Komponente ist, den durch das dynamische Verhalten der thermischen Linse verursachten Fokusshift zu kompensieren, um eine vorgegebene Fokuslage $Z$ konstant halten zu können.

Im Beispiel der Figuren 1 und 2 werden zwei Zeitskalen verglichen: wie schnell ein Kreis geschnitten werden kann und wie schnell sich ein thermischer Gradient durch den Transport von Wärme von der heißen Linsenmitte, wo die Laserstrahlung auftrifft, zur kalten Außenseite der Linse entwickelt. In einer ersten Alternative der Erfindung wird dieses transiente Verhalten wie folgt definiert:

$$z_t(\Delta P, t) = A \cdot m^2 \cdot \Delta P \cdot (1 - e^{-t/\tau}) \qquad (5)$$

$m$ ist die Vergrößerung des Optiksystems (also der Laserstrahloptik), $A$ ist der erste Parameter, der die Größe des Fokusshifts zwischen zwei Leistungswerten im stationären Zustand pro Leistungseinheit angibt, und $\tau$ beschreibt die Zeitskala der Entwicklung der thermischen Linse. Der Zeitpunkt $t=0$ ist hierbei definiert als der Zeitpunkt, zu dem eine Änderung der Leistung stattfindet, d.h. wenn $\varDelta P \neq 0$. Anschließend, d.h. t>0, ist die Leistung vorzugsweise zumindest für ein vorgegebenes Zeitintervall konstant.

Gleichung (5) beschreibt eine exponentielle Annäherung. Beispielsweise bei einem exponentiellen Abfall der Fokuslage (siehe Figur 6: $\varDelta P_4$ oder $\varDelta P_5$) beschreibt die Zeitkonstante $\tau$ die Zeitspanne, bis die Fokuslage um den Faktor $1/e$ abfällt. Bei einem Abbildungsmaßstab von 1 und einer Änderung der Laserleistung $\varDelta P$ von 1 kW ist $A$ der Fokusshift im stationären Zustand, also $t\rightarrow\infty$.

Gleichung (5) beschreibt eine Fokuslagenänderung bei einer Leistungsänderung. Per Definition ist der Zeitpunkt $t=0$ definiert als der Zeitpunkt, zu dem eine Änderung der Leistung stattfindet, z.B. wenn $\varDelta P \neq 0$. Hierbei kann ein Filtersignal (z.B.: ein Tiefpass Filter) verwendet werden, um den Term $P_t = \Delta P \cdot (1 - e^{-t/\tau})$ anzunähern. Das heißt, wenn die Laserleistung bekannt ist, kann ein Filter vorgesehen sein, der eingerichtet ist, eine Leistungsstufe $\varDelta P_i$ (vgl. Fig. 6) in einer exponentiellen Näherung zu bestimmen. Vorteil hier ist, dass die Zeit $t$ nicht mehr explizit in obenstehender Gleichung (5) berücksichtigt werden muss, weil nur die Leistungsänderung entscheidend ist. Mit anderen Worten, der Filter wandelt eine Leistungsänderung $\Delta P_i$ (Leistungsstufe, bzw. Leistungssprung) in einen anderen Wert um, z.B. in ein Filtersignal $P_t$, das sich intrinsisch mit der Zeit ändert. Deswegen kann am Ende der "zeitabhängige" Wert der Fokuslage $z_t$ nur abhängig von der Leistung $P_t$, d.h. als $z_t(P_t)$ bestimmt werden.

Ein Vorteil der erfindungsgemäßen Fokuseinstellung besteht darin, dass der Benutzer des Laserbearbeitungssystems (z.B. der Endkunde) drei voreingestellte Parameter (z.B. vom Hersteller) zur Verfügung haben kann: $z_{Offset}$, $A$ und $\tau$. Diese Parameter sind in erster Linie theoretisch beschreibbar, können aber gewisse Streuungen zeigen, wie beispielsweise aufgrund der Absorption von optischen Materialen oder durch unterschiedliche thermische Rahmenbedingungen (z.B.: Wasserkühlung bzw. Wasserdurchfluss, Temperatur, etc.). Eine Schnittstelle kann dem Benutzer eine Variation dieser Parameter ermöglichen. Damit können Effekte durch Komponententausch, Alterung oder Verschmutzung von Optiken kompensiert werden.

Gleichung (5) gibt auch die Möglichkeit, ein Zoomsystem zu beschreiben, bei dem mehrere Vergrößerungen $m$ möglich sind. $A$ und $\tau$ sind unabhängig von der Vergrößerung $m$. $z_{Offset}$ kann einzeln für jede Vergrößerung definiert werden, ist aber unabhängig von Zeit und Laserleistung. In einigen Ausführungsformen kann eine Beziehung zwischen der Vergrößerung $m$ und der Fokuslage in der Rechen- und Steuereinheit hinterlegt sein. Damit können alle komplexen Beschreibungen in der Rechen- und Steuereinheit enthalten sein, und der Benutzer kann mittels eines Satzes einfacher Parameter eine Optimierung der voreingestellten Parameter durchführen.

In einer zweiten Alternative der Erfindung wird die Beschreibung des transienten Verhaltens (also die Gleichung (5)) wie folgt definiert:

$$z_t(\Delta P, t) = \sum_{i=1}^{N} A_i \cdot m^2 \cdot \Delta P \cdot (1 - e^{-t/\tau_i}) \qquad (6)$$

$N$ ist eine natürliche Zahl und kann geeignet groß gewählt werden. Mit dieser Beschreibung können unterschiedliche Zeitkonstanten $\tau$ und Größen $A_i$ verwendet werden, um genauere Ergebnisse zur erzielen. Gleichung (6) ist insbesondere dann vorteilhaft, wenn unterschiedliche thermische Prozesse mit unterschiedlichen Zeitskalen eine relevante Rolle für den Fokusshift spielen.

In einer dritten Alternative der Erfindung wird die Beschreibung des transienten Verhaltens mit einem polynomischen Term wie folgt definiert:

$$z_t(\Delta P, t) = \sum_{i=1}^{N} A_i \cdot m^2 \cdot \Delta P \cdot (1 - e^{-t/\tau_i}) + \sum_{j=1}^{M} B_j \cdot m^2 \cdot t^j \qquad (7)$$

Der zweite Term von Gleichung (7) ist ein Polynom der Ordnung $M$. $B_j$ ist der Koeffizient des Potenzgrades $j$. Jeder Koeffizient ($A_i$, $B_j$) kann unabhängig sein. $M$ ist eine natürliche Zahl.

Damit kann eine simple und robuste Fokuseinstellung in Echtzeit ermöglicht werden. Entsprechend der Erfindung, für die Einstellung der Fokuslage wird ein zeitabhängiger Korrekturterm, der den dynamischen Verlauf des Fokusshift beschreibt, verwendet. Der zeitabhängige Korrekturterm erfordert keinen komplexen mechanischen Aufbau, wodurch eine Komplexität der Vorrichtung sowohl bei der Herstellung als auch bei der Bedienung verringert werden kann. Zudem ermöglicht die erfindungsgemäße Lösung, auf den Fokusshift bzw. Schwankungen des Fokus flexibel zu reagieren. Beispielsweise können einer oder mehrere Faktoren berücksichtigen werden, wie eine Streuung aufgrund der Absorption von optischen Materialen, unterschiedliche thermische Rahmenbedingungen (z.B. Wasserkühlung, Durchfluss und Temperatur) oder eine Verschmutzung der Laserstrahloptik.

**Patentansprüche**

1. Vorrichtung (200) zum Einstellen einer vorgegebenen Fokuslage $Z$ eines Laserstrahls (10) in einem Laserbearbeitungssystem (100), umfassend:

   eine Einstelleinheit (150) zum Einstellen der Fokuslage $z$,
   **dadurch gekennzeichnet, dass**

die Vorrichtung ferner eine Recheneinheit umfasst, die eingerichtet ist, um einen zeitabhängigen Wert $z_t$ einer Fokuslage $z$ basierend auf einem ersten Parameter, einem zweiten Parameter und einem dritten Parameter zu berechnen; und

eine Steuereinheit, die eingerichtet ist, um die vorgegebene Fokuslage $Z$ des Laserstrahls (10) mittels der Einstelleinheit (150) basierend auf dem zeitabhängigen Wert $z_t$ der Fokuslage $z$ einzustellen,

wobei der erste Parameter einen laserleistungsabhängigen Fokusshift $A$ angibt,

wobei der zweite Parameter eine Zeitkonstante $\tau$ einer Fokuslagenänderung aufgrund einer temperaturinduzierten Brechkraftänderung mindestens eines optischen Elements einer Laserstrahloptik um den Faktor $1/e$ angibt, und

wobei der dritte Parameter eine aktuelle Laserleistung $P$ zu einem Zeitpunkt $t$ angibt,

wobei die Recheneinheit weiter eingerichtet ist, um den zeitabhängigen Wert $z_t$ der Fokuslage $z$ basierend auf einem weiteren Parameter, der eine Vergrößerung $m$ der Laserstrahloptik angibt, zu berechnen,

wobei die Recheneinheit eingerichtet ist, um den zeitabhängigen Wert $z_t$ der Fokuslage $z$ unter Verwendung der folgenden Gleichung zu berechnen:

$$z_t(\Delta P, t) = A \cdot m^2 \cdot \Delta P \cdot \left(1 - e^{-t/\tau}\right)$$

wobei $\Delta P = P - P_0$ ist, und wobei $P_0$ eine Referenzlaserleistung angibt, und wobei ein Zeitpunkt $t=0$ als der Zeitpunkt definiert ist, zu dem eine Änderung der Laserleistung $\Delta P \neq 0$ auftritt, oder

wobei die Recheneinheit eingerichtet ist, um den zeitabhängigen Wert $z_t$ der Fokuslage $z$ unter Verwendung der folgenden Gleichung zu berechnen:

$$z_t(\Delta P, t) = \sum_{i=1}^{N} A_i \cdot m^2 \cdot \Delta P \cdot \left(1 - e^{-t/\tau_i}\right)$$

wobei $\Delta P = P - P_0$ ist, und wobei $P_0$ eine Referenzlaserleistung angibt, und wobei ein Zeitpunkt $t=0$ als der Zeitpunkt definiert ist, zu dem eine Änderung der Laserleistung $\Delta P \neq 0$ auftritt, und wobei $N$ eine natürliche Zahl ist, oder

wobei die Recheneinheit eingerichtet ist, um den zeitabhängigen Wert $z_t$ der Fokuslage $z$ unter Verwendung der folgenden Gleichung zu berechnen:

$$z_t(\Delta P, t) = \sum_{i=1}^{N} A_i \cdot m^2 \cdot \Delta P \cdot \left(1 - e^{-t/\tau_i}\right) + \sum_{j=1}^{M} B_j \cdot m^2 \cdot t^j$$

wobei $\Delta P = P - P_0$ ist, und wobei $P_0$ eine Referenzlaserleistung angibt, und wobei ein Zeitpunkt $t=0$ als der Zeitpunkt definiert ist, zu dem eine Änderung der Laserleistung $\Delta P \neq 0$ auftritt, und wobei $N$ eine natürliche Zahl ist, und wobei $M$ eine natürliche Zahl ist, und wobei $B$ ein Koeffizient des Potenzgrades $j$ ist.

2. Die Vorrichtung (200) nach Anspruch 1, wobei die Recheneinheit eingerichtet ist, um bei bekannter Laserleistung $P$ den Term $\Delta P \cdot \left(1 - e^{-t/\tau}\right)$ durch ein Filtersignal exponentiell anzunähern und den zeitabhängigen Wert $z_t$ der Fokuslage $z$ als Funktion der Laserleistung mit $z_t(\Delta P)$ zu berechnen, die nicht explizit von der Zeit $t$ abhängig ist.

3. Die Vorrichtung (200) nach Anspruch 1 oder 2, weiter mit einem Mittel (220) zum Erfassen der aktuellen Laserleitung $P$, wobei das Mittel (220) einen oder mehrere Leistungssensoren und/oder eine Datenschnittstelle, über die Daten bezüglich der aktuellen Laserstrahlleistung empfangbar sind, umfasst.

4. Die Vorrichtung (200) nach einem der vorstehenden Ansprüche, wobei die Steuereinheit eingerichtet ist, um die vorgegebene Fokuslage $Z$ des Laserstrahls (10) basierend auf dem zeitabhängigen Wert $z_t$ und einem stationären Wert $z_0$ der Fokuslage einzustellen, wobei der stationäre Wert $z_0$ die Fokuslage $z$ für eine Referenzlaserleistung $P_0$ angibt.

5. Die Vorrichtung (200) nach Anspruch 4, wobei in der Recheneinheit oder in der Steuereinheit eine Position $L_1$ für

mindestens ein bewegliches optisches Element der Laserstrahloptik, das zum Einstellen der Fokuslage Z eingerichtet ist, entsprechend dem stationären Wert $z_0$ der Fokuslage für mindestens eine Referenzlaserleistung $P_0$ als Steuerkurve gespeichert ist.

6. Die Vorrichtung (200) nach einem der vorstehenden Ansprüche, wobei die Steuereinheit eingerichtet ist, um die vorgegebene Fokuslage Z des Laserstrahls (10) weiter basierend auf einem Offset $z_{Off}$ einzustellen.

7. Die Vorrichtung (200) nach einem der vorstehenden Ansprüche, weiter umfassend eine Benutzerschnittstelle, die eingerichtet ist, um Benutzereingaben wenigstens für den laserleistungsabhängigen Fokusshift A und/oder die Zeitkonstante $\tau$ und/oder mindestens einen Offset $z_{Off}$ zu empfangen.

8. Die Vorrichtung (200) nach einem der vorstehenden Ansprüche, wobei die Laserstrahloptik ein Zoomsystem mit verschiedenen einstellbaren Vergrößerungen $m_i$ umfasst und ein Offset $z_{Off,mi}$ für jede der Vergrößerungen $m_i$ einstellbar ist.

9. Die Vorrichtung (200) nach einem der vorstehenden Ansprüche, wobei die Einstelleinheit (150) zum Einstellen der Fokuslage z eingerichtet ist, um eine Position $L_1$ wenigstens eines beweglichen optischen Elements der Laserstrahloptik, das zum Einstellen der Fokuslage eingerichtet ist, einzustellen.

10. Die Vorrichtung (200) nach Anspruch 9, wobei die Recheneinheit eingerichtet ist, eine Einstellung für die Einstelleinheit (150) entsprechend der vorgegebenen Fokuslage Z zu berechnen, wobei die Einstellung eine Position des beweglichen optischen Elements entsprechend der vorgegebenen Fokuslage Z umfasst.

11. Die Vorrichtung (200) nach einem der vorstehenden Ansprüche, wobei die Laserstrahloptik (115, 120) wenigstens ein optisches Element umfasst, das aus der Gruppe ausgewählt ist, die aus einer Kollimator-Optik (115), einer Fokussier-Optik (120), einer Zoom-Optik, einer Strahlformungsoptik und einem Schutzglas besteht, wobei dieses wenigstens eine optische Element die temperaturabhängige Brechkraft aufweist und/oder beweglich und dazu eingerichtet ist, die Fokuslage Z einzustellen.

12. Laserbearbeitungssystem (100) zur Bearbeitung eines Werkstücks mittels eines Laserstrahls, umfassend:

eine Laserstrahloptik (115, 120) im Strahlengang des Laserstrahls (10), wobei die Laserstrahloptik (115, 120) mindestens ein optisches Element umfasst, das eine temperaturabhängige Brechkraft aufweist;
**gekennzeichnet durch**:
die Vorrichtung (200) nach einem der vorstehenden Ansprüche.

13. Verfahren zum Einstellen einer vorgegebenen Fokuslage (Z) eines Laserstrahls (10) in einem Laserbearbeitungssystem (100), **gekennzeichnet durch**:

Bereitstellen eines ersten Parameters, eines zweiten Parameters, eines dritten Parameters und eines weiteren Parameters, wobei der erste Parameter einen laserleistungsabhängigen Fokusshift A angibt, wobei der zweite Parameter eine Zeitkonstante $\tau$ einer Änderung der Fokuslage aufgrund einer temperaturinduzierten Brechkraftänderung mindestens eines optischen Elements einer Laserstrahloptik um den Faktor $1/e$ angibt, wobei der dritte Parameter eine aktuelle Laserleistung P zu einem Zeitpunkt t angibt, und wobei der weitere Parameter eine Vergrößerung m der Laserstrahloptik angibt;
Berechnen eines zeitabhängigen Werts $z_t$ der Fokuslage (z) basierend auf dem ersten Parameter, dem zweiten Parameter, dem dritten Parameter und dem weiteren Parameter; und
Einstellen der vorgegebenen Fokuslage (Z) des Laserstrahls (10) basierend auf dem zeitabhängigen Wert $z_t$, wobei die Recheneinheit eingerichtet ist, um den zeitabhängigen Wert $z_t$ der Fokuslage z unter Verwendung der folgenden Gleichung zu berechnen:

$$z_t(\Delta P, t) = A \cdot m^2 \cdot \Delta P \cdot \left(1 - e^{-t/\tau}\right)$$

wobei $\Delta P = P - P_0$ ist, und wobei $P_0$ eine Referenzlaserleistung angibt, und wobei ein Zeitpunkt $t=0$ als der Zeitpunkt definiert ist, zu dem eine Änderung der Laserleistung $\Delta P \neq 0$ auftritt, oder
wobei die Recheneinheit eingerichtet ist, um den zeitabhängigen Wert $z_t$ der Fokuslage z unter Verwendung der folgenden Gleichung zu berechnen:

$$z_t(\Delta P, t) = \sum_{i=1}^{N} A_i \cdot m^2 \cdot \Delta P \cdot (1 - e^{-t/\tau_i})$$

wobei $\Delta P = P - P_0$ ist, und wobei $P_0$ eine Referenzlaserleistung angibt, und wobei ein Zeitpunkt $t=0$ als der Zeitpunkt definiert ist, zu dem eine Änderung der Laserleistung $\Delta P \neq 0$ auftritt, und wobei $N$ eine natürliche Zahl ist, oder wobei die Recheneinheit eingerichtet ist, um den zeitabhängigen Wert $z_t$ der Fokuslage $z$ unter Verwendung der folgenden Gleichung zu berechnen:

$$z_t(\Delta P, t) = \sum_{i=1}^{N} A_i \cdot m^2 \cdot \Delta P \cdot (1 - e^{-t/\tau_i}) + \sum_{j=1}^{M} B_j \cdot m^2 \cdot t^j$$

wobei $\Delta P = P - P_0$ ist, und wobei $P_0$ eine Referenzlaserleistung angibt, und wobei ein Zeitpunkt $t=0$ als der Zeitpunkt definiert ist, zu dem eine Änderung der Laserleistung $\Delta P \neq 0$ auftritt, und wobei $N$ eine natürliche Zahl ist, und wobei $M$ eine natürliche Zahl ist, und wobei $B$ ein Koeffizient des Potenzgrades $j$ ist.

## Claims

1. A device (200) for adjusting a predetermined focus position Z of a laser beam (10) in a laser processing system (100) comprising:

   an adjustment unit (150) for adjusting the focus position z,
   **characterised in that**
   the device further comprises a calculation unit arranged to calculate a time-dependent value $z_t$ of a focus position z based on a first parameter, a second parameter, and a third parameter; and
   a control unit arranged to adjust the predetermined focus position Z of the laser beam (10) by means of the adjustment unit (150) based on the time-dependent value $z_t$ of the focus position z,
   wherein the first parameter indicates a laser power dependent focus shift A,
   wherein the second parameter indicates a time constant $\tau$ of a focus position change due to a temperature-induced refractive power change of at least one optical element of a laser beam optics by the factor of 1/e, and
   wherein the third parameter indicates a current laser power P at a time t,
   wherein the calculation unit is further arranged to calculate the time-dependent value $z_t$ of the focus position z based on a further parameter indicating a magnification m of the laser beam optics,
   wherein the calculation unit is arranged to calculate the time-dependent value $z_t$ of the focus position z using the following equation:

   $$z_t(\Delta P, t) = A \cdot m^2 \cdot \Delta P \cdot (1 - e^{-t/\tau})$$

   wherein $\Delta P = P - P_0$, and wherein $P_0$ indicates a reference laser power, and wherein a time $t=0$ is defined as the time at which a change in the laser power $\Delta P \neq 0$ occurs, or
   wherein the calculation unit is arranged to compute the time-dependent value $z_t$ of the focus position z using the following equation:

   $$z_t(\Delta P, t) = \sum_{i=1}^{N} A_i \cdot m^2 \cdot \Delta P \cdot (1 - e^{-t/\tau_i})$$

   wherein $\Delta P = P - P_0$, and wherein $P_0$ indicates a reference laser power, and wherein a time $t=0$ is defined as the time at which a change in the laser power $\Delta P \neq 0$ occurs, and wherein N is a natural number, or
   wherein the calculation unit is arranged to calculate the time-dependent value $z_t$ of the focus position z using the following equation:

$$z_t(\Delta P, t) = \sum_{i=1}^{N} A_i \cdot m^2 \cdot \Delta P \cdot \left(1 - e^{-t/\tau_i}\right) + \sum_{j=1}^{M} B_j \cdot m^2 \cdot t^j$$

wherein $\Delta P = P - P_0$, and wherein $P_0$ indicates a reference laser power, and wherein a time t=0 is defined as the time at which a change in the laser power $\Delta P \neq 0$ occurs, and wherein N is a natural number, and wherein M is a natural number, and wherein B is a coefficient of the power j.

2. The device (200) according to claim 1, wherein the calculation unit is arranged to exponentially approximate the term $\Delta P \cdot \left(1 - e^{-t/\tau}\right)$ by a filter signal when the laser power P is known and to calculate the time-dependent value $z_t$ of the focus position z as a function of the laser power with $z_t(\Delta P)$ not explicitly dependent on the time t.

3. The device (200) according to claim 1 or 2, further comprising a means (220) for detecting the current laser power P, wherein the means (220) comprises one or more power sensors and/or a data interface via which data regarding the current laser beam power are receivable.

4. The device (200) according to any one of the preceding claims, wherein the control unit is arranged to adjust the predetermined focus position Z of the laser beam (10) based on the time-dependent value $z_t$ and a stationary value $z_0$ of the focus position, wherein the stationary value $z_0$ indicates the focus position z for a reference laser power $P_0$.

5. The device (200) according to claim 4, wherein in the calculation unit or in the control unit a position $L_1$ for at least one movable optical element of the laser beam optics, which is arranged for adjusting the focus position Z, is stored as a control curve corresponding to the stationary value $z_0$ of the focus position for at least one reference laser power $P_0$.

6. The device (200) according to any one of the preceding claims, wherein the control unit is arranged to further adjust the predetermined focus position Z of the laser beam (10) based on an offset $z_{0ff}$.

7. The device (200) according to any one of the preceding claims, further comprising a user interface arranged to receive user inputs for at least the laser power dependent focus shift A and/or the time constant $\tau$ and/or at least one offset $z_{0ff}$.

8. The device (200) according to any one of the preceding claims, wherein the laser beam optics comprises a zoom system with different adjustable magnifications $m_i$ and an offset $z_{0ff,mi}$ is adjustable for each of the magnifications $m_i$.

9. The device (200) according to any one of the preceding claims, wherein the adjustment unit (150) for adjusting the focus position z is arranged to adjust a position $L_1$ of at least one movable optical element of the laser beam optics arranged to adjust the focus position.

10. The device (200) according to claim 9, wherein the calculation unit is arranged to calculate an adjustment for the adjustment unit (150) corresponding to the predetermined focus position Z, wherein the adjustment comprises a position of the movable optical element corresponding to the predetermined focus position Z.

11. The device (200) according to any one of the preceding claims, wherein the laser beam optics (115, 120) comprises at least one optical element selected from the group consisting of a collimator optics (115), a focusing optics (120), a zoom optics, a beam shaping optics, and a protective glass, wherein said at least one optical element has the temperature-dependent refractive power and/or is movable and arranged to adjust the focus position Z.

12. A laser processing system (100) for processing a workpiece by means of a laser beam comprising:
a laser beam optics (115, 120) in the beam path of the laser beam (10), wherein the laser beam optics (115, 120) comprises at least one optical element having a temperature-dependent refractive power;
**characterised by**:
the device (200) according to any one of the preceding claims.

13. A method for adjusting a predetermined focus position (Z) of a laser beam (10) in a laser processing system (100), **characterised by**:

providing a first parameter, a second parameter, a third parameter, and a further parameter, wherein the first parameter indicates a laser power dependent focus shift A, wherein the second parameter indicates a time constant $\tau$ of a change of the focus position due to a temperature-induced refractive power change of at least one optical element of a laser beam optics by the factor 1/e, wherein the third parameter indicates a current laser power P at a time t, and wherein the further parameter indicates a magnification m of the laser beam optics; calculating a time-dependent value $z_t$ of the focus position (z) based on the first parameter, the second parameter, the third parameter, and the further parameter; and

adjusting the predetermined focus position (Z) of the laser beam (10) based on the time-dependent value $z_t$, wherein the calculation unit is arranged to calculate the time-dependent value $z_t$ of the focus position z using the following equation:

$$z_t(\Delta P, t) = A \cdot m^2 \cdot \Delta P \cdot (1 - e^{-t/\tau})$$

wherein $\Delta P = P - P_0$, and wherein $P_0$ indicates a reference laser power, and wherein a time t=0 is defined as the time at which a change in the laser power $\Delta P \neq 0$ occurs, or
wherein the calculation unit is arranged to compute the time-dependent value $z_t$ of the focus position z using the following equation:

$$z_t(\Delta P, t) = \sum_{i=1}^{N} A_i \cdot m^2 \cdot \Delta P \cdot (1 - e^{-t/\tau_i})$$

wherein $\Delta P = P - P_0$, and wherein $P_0$ indicates a reference laser power, and wherein a time t=0 is defined as the time at which a change in the laser power $\Delta P \neq 0$ occurs, and wherein N is a natural number, or
wherein the calculation unit is arranged to calculate the time-dependent value $z_t$ of the focus position z using the following equation:

$$z_t(\Delta P, t) = \sum_{i=1}^{N} A_i \cdot m^2 \cdot \Delta P \cdot (1 - e^{-t/\tau_i}) + \sum_{j=1}^{M} B_j \cdot m^2 \cdot t^j$$

wherein $\Delta P = P - P_0$, and wherein $P_0$ indicates a reference laser power, and wherein a time t=0 is defined as the time at which a change in the laser power $\Delta P \neq 0$ occurs, and wherein N is a natural number, and wherein M is a natural number, and wherein B is a coefficient of the power j.

## Revendications

1. Dispositif (200) pour régler une position focale Z prédéfinie d'un faisceau laser (10) dans un système d'usinage au laser (100), comprenant :

   une unité de réglage (150) pour régler la position focale *z*,
   **caractérisé en ce que**
   le dispositif comprend en outre une unité de calcul configurée pour calculer une valeur $z_t$ d'une position focale *z* en fonction du temps, sur la base d'un premier paramètre, d'un deuxième paramètre et d'un troisième paramètre ; et
   une unité de commande configurée pour régler la position focale *Z* prédéfinie du faisceau laser (10) au moyen de l'unité de réglage (150) sur la base de la valeur $z_t$ de la position focale *z* en fonction du temps,
   dans lequel le premier paramètre indique un décalage focal *A* en fonction de la puissance du laser,
   dans lequel le deuxième paramètre indique une constante de temps $\tau$ d'un changement de position focale dû à une variation de réfringence induite par la température d'au moins un élément optique d'une optique à faisceau laser, d'un facteur de *1/e,* et
   dans lequel le troisième paramètre indique une puissance actuelle du laser *P* à un instant *t,*

dans lequel l'unité de calcul est en outre configurée pour calculer la valeur $z_t$ de la position focale $z$ en fonction du temps, sur la base d'un paramètre supplémentaire indiquant un grossissement $m$ de l'optique à faisceau laser, dans lequel l'unité de calcul est configurée pour calculer la valeur $z_t$ de la position focale $z$ en fonction du temps en utilisant l'équation suivante :

$$z_t(\Delta P, t) = A \cdot m^2 \cdot \Delta P \cdot (1 - e^{-t/\tau})$$

dans laquelle $\Delta P = P - P_0$ et $P_0$ indique une puissance de référence du laser, et dans laquelle un instant $t=0$ est défini comme l'instant où une variation de la puissance du laser $\Delta P \neq 0$ se produit, ou dans lequel l'unité de calcul est configurée pour calculer la valeur $z_t$ de la position

$$z_t(\Delta P, t) = \sum_{i=1}^{N} A_i \cdot m^2 \cdot \Delta P \cdot (1 - e^{-t/\tau_i})$$

focale $z$ en fonction du temps en utilisant l'équation suivante :
dans laquelle $\Delta P = P - P_0$ et $P_0$ indique une puissance de référence du laser, et dans laquelle un instant $t=0$ est défini comme l'instant où une variation de la puissance du laser $\Delta P \neq 0$ se produit, et dans laquelle $N$ est un entier naturel, ou
dans lequel l'unité de calcul est configurée pour calculer la valeur $z_t$ de la position focale $z$ en fonction du temps en utilisant l'équation suivante :

$$z_t(\Delta P, t) = \sum_{i=1}^{N} A_i \cdot m^2 \cdot \Delta P \cdot (1 - e^{-t/\tau_i}) + \sum_{j=1}^{M} B_j \cdot m^2 \cdot t^j$$

dans laquelle $\Delta P = P - P_0$ et $P_0$ indique une puissance de référence du laser, et dans laquelle un instant $t=0$ est défini comme l'instant où une variation de la puissance du laser $\Delta P \neq 0$ se produit, et dans laquelle $N$ est un entier naturel, et dans laquelle $M$ est un entier naturel et $B$ est un coefficient de la puissance $j$.

2. Dispositif (200) selon la revendication 1, dans lequel l'unité de calcul est configurée pour approximer de manière exponentielle le terme $\Delta P \cdot (1 - e^{-t/\tau})$ par un signal de filtrage lorsque la puissance du laser $P$ est connue, et pour calculer la valeur $z_t$ de la position focale $z$ dépendante du temps en fonction de la puissance laser avec $z_t(\Delta P)$, qui n'est pas explicitement dépendante du temps.

3. Dispositif (200) selon la revendication 1 ou 2, comportant en outre un moyen (220) pour détecter la puissance actuelle du laser $P$, dans lequel le moyen (220) comprend un ou plusieurs capteurs de puissance et/ou une interface de données par l'intermédiaire de laquelle les données concernant la puissance actuelle du faisceau laser peuvent être reçues.

4. Dispositif (200) selon l'une des revendications précédentes, dans lequel l'unité de commande est configurée pour régler la position focale $Z$ prédéfinie du faisceau laser (10) sur la base de la valeur $z_t$ en fonction du temps et d'une valeur fixe $z_0$ de la position focale, dans lequel la valeur fixe $z_0$ indique la position focale $z$ pour une puissance de référence du laser $P_0$.

5. Dispositif (200) selon la revendication 4, dans lequel, dans l'unité de calcul ou dans l'unité de commande, une position $L_1$ pour au moins un élément optique mobile de l'optique à faisceau laser qui est configuré pour régler la position focale $Z$, est mémorisée sous la forme d'une courbe de commande correspondant à la valeur fixe $z_0$ de la position focale pour au moins une puissance de référence du laser $P_0$.

6. Dispositif (200) selon l'une des revendications précédentes, dans lequel l'unité de commande est configurée pour régler la position focale $Z$ prédéfinie du faisceau laser (10) de nouveau sur la base d'un décalage $z_{Off}$.

**7.** Dispositif (200) selon l'une des revendications précédentes, comprenant en outre une interface utilisateur configurée pour recevoir des entrés d'utilisateur au moins pour le décalage focal $A$ en fonction de la puissance du laser et/ou la constante de temps $\tau$ et/ou au moins un décalage $z_{Off}$.

**8.** Dispositif (200) selon l'une des revendications précédentes, dans lequel l'optique à faisceau laser comprend un système de zoom avec différents grossissements réglables $m_i$ et un décalage $z_{Off,mi}$ peut être réglé pour chacun des grossissements $mi$.

**9.** Dispositif (200) selon l'une des revendications précédentes, dans lequel l'unité de réglage (150) est configurée pour régler la position focale $z$, afin de régler une position $L_1$ d'au moins un élément optique mobile de l'optique à faisceau laser qui est configuré pour régler la position focale.

**10.** Dispositif (200) selon la revendication 9, dans lequel l'unité de calcul est configurée pour calculer un réglage pour l'unité de réglage (150) correspondant à la position focale Z prédéfinie, dans lequel le réglage comprend une position de l'élément optique mobile correspondant à la position focale Z prédéfinie.

**11.** Dispositif (200) selon l'une des revendications précédentes, dans lequel l'optique à faisceau laser (115, 120) comprend au moins un élément optique qui est choisi parmi le groupe constitué d'une optique de collimation (115), d'une optique de focalisation (120), d'une optique de zoom, d'une optique de conformation de faisceau et d'un verre de protection, ledit au moins un élément optique ayant la réfringence dépendante de la température et/ou étant mobile et configuré pour régler la position focale Z.

**12.** Système d'usinage au laser (100) pour usiner une pièce au moyen d'un faisceau laser, comprenant :

   une optique à faisceau laser (115, 120) dans le trajet de faisceau du faisceau laser (10), dans lequel l'optique à faisceau laser (115, 120) comprend au moins un élément optique ayant une réfringence dépendante de la température ; et
   le dispositif (200) selon l'une des revendications précédentes.

**13.** Procédé pour régler une position focale (Z) prédéfinie d'un faisceau laser (10) dans un système d'usinage au laser (100), **caractérisé par** les étapes consistant à :

   fournir un premier paramètre, un deuxième paramètre, un troisième paramètre et un paramètre supplémentaire, dans lequel le premier paramètre indique un décalage focal $A$ en fonction de la puissance du laser, dans lequel le deuxième paramètre indique une constante de temps $\tau$ d'un changement de la position focale dû à une variation de réfringence induite par la température d'au moins un élément optique d'une optique à faisceau laser, du facteur $1/e$, dans lequel le troisième paramètre indique une puissance actuelle du laser $P$ à un instant $t$, et dans lequel le paramètre supplémentaire indique un grossissement $m$ de l'optique à faisceau laser ;
   calculer une valeur $z_t$ de la position focale ($z$) en fonction du temps sur la base du premier paramètre, du deuxième paramètre, du troisième paramètre et du paramètre supplémentaire ; et
   régler la position focale (Z) prédéfinie du faisceau laser (10) sur la base de la valeur $z_t$, en fonction du temps, dans lequel l'unité de calcul est configurée pour calculer la valeur $z_t$ de la position focale z en fonction du temps en utilisant l'équation suivante :

$$z_t(\Delta P, t) = A \cdot m^2 \cdot \Delta P \cdot \left(1 - e^{-t/\tau}\right)$$

   dans laquelle $\Delta P = P - P_0$ et $P_0$ indique une puissance de référence du laser, et dans laquelle un instant $t=0$ est défini comme l'instant où une variation de la puissance du laser $\Delta P \neq 0$ se produit, ou
   dans lequel l'unité de calcul est configurée pour calculer la valeur $z_t$ de la position

$$z_t(\Delta P, t) = \sum_{i=1}^{N} A_i \cdot m^2 \cdot \Delta P \cdot \left(1 - e^{-t/\tau_i}\right)$$

   focale z en fonction du temps en utilisant l'équation suivante :
   dans laquelle $\Delta P = P - P_0$ et $P_0$ indique une puissance de référence du laser, et dans laquelle un instant $t=0$ est défini comme l'instant où une variation de la puissance du laser $\Delta P \neq 0$ se produit, et dans laquelle $N$ est un entier naturel, ou
dans lequel l'unité de calcul est configurée pour calculer la valeur $z_t$ de la position focale $z$ en fonction du temps en utilisant l'équation suivante :

$$z_t(\Delta P, t) = \sum_{i=1}^{N} A_i \cdot m^2 \cdot \Delta P \cdot (1 - e^{-t/\tau_i}) + \sum_{j=1}^{M} B_j \cdot m^2 \cdot t^j$$

dans laquelle $\Delta P = P - P_0$ et $P_0$ indique une puissance de référence du laser, et dans laquelle un instant $t=0$ est défini comme l'instant où une variation de la puissance du laser $\Delta P \neq 0$ se produit, et dans laquelle $N$ est un entier naturel et $M$ est un entier naturel, et dans laquelle $B$ est un coefficient de la puissance $j$.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6462301 B
- US 2016263704 A1
- US 2014347655 A1